(19) Europäisches Patentamt
European Patent Office
Office européen des brevets

(11) **EP 0 813 050 B1**

(12) **EUROPÄISCHE PATENTSCHRIFT**

(45) Veröffentlichungstag und Bekanntmachung des Hinweises auf die Patenterteilung:
**30.06.2004   Patentblatt 2004/27**

(51) Int Cl.$^7$: **G01M 15/00**

(21) Anmeldenummer: **97106221.1**

(22) Anmeldetag: **16.04.1997**

(54) **Einrichtung zur Zylindererkennung bei einer Mehrzylinder-Brennkraftmaschine**

Arrangement for identifying a cylinder in a multicylinder combustion engine

Arrangement d'identification d'un cylindre dans un moteur à combustion avec plusieurs cylindres

(84) Benannte Vertragsstaaten:
**DE FR GB IT**

(30) Priorität: **14.06.1996  DE 19623716**
            **26.09.1996  DE 19639541**

(43) Veröffentlichungstag der Anmeldung:
**17.12.1997   Patentblatt 1997/51**

(73) Patentinhaber: **ROBERT BOSCH GMBH**
**70442 Stuttgart (DE)**

(72) Erfinder:
• **Denz, Helmut**
  **70176 Stuttgart (DE)**
• **Walter, Klaus**
  **74321 Bietigheim-Bissingen (DE)**

(56) Entgegenhaltungen:
DE-A- 4 131 004          DE-A- 19 513 597
US-A- 4 558 591          US-A- 5 269 274

**Beschreibung**

Stand der Technik

Die Erfindung geht aus von einer Einrichtung zur Zylindererkennung bei einer Mehrzylinder-Brennkraftmaschine nach der Gattung des Hauptanspruchs.

Es sind bereits Verfahren beziehungsweise Einrichtungen zur Zylindererkennung bei Mehrzylinder-Brennkraftmaschinen bekannt, bei denen auf einem mit der Nockenwelle der Brennkraftmaschine fest verbundenen Geberrad Markierungen aufgebracht sind, die in ihrer Anzahl der Anzahl der Zylinder entsprechen. Eine dieser Markierungen ist dabei gegenüber den übrigen unterschiedlich ausgestaltet. Sie dient dabei zur Erzeugung einer Bezugsmarke, mit deren Hilfe die Winkellage der Brennkraftmaschine bestimmbar ist. Diese Bezugsmarke wird üblicherweise der oberen Totpunktstellung eines vorgebbaren Zylinders zugeordnet.

Die erwähnte Geberscheibe wird mit Hilfe eines Aufnehmers, beispielsweise eines Hallsensors, abgetastet. Das Ausgangssignal des Aufnehmers wird in einer Aufbereitungsschaltung zu einem rechteckförmigen Signal verarbeitet. Die Auswerteschaltung ermittelt zwischen vorgebbaren Flanken des Rechtecksignales zeitliche Abstände und erkennt durch Auswertung der ermittelten Zeitabstände die Bezugsmarke. Eine Einrichtung zur Zylindererkennung, die nach dem erwähnten Prinzip arbeitet, ist beispielsweise aus der DE-OS 41 31 004 bekannt.

Damit der Einfluß der Drehzahldynamik beim Beschleunigen oder Abbremsen auf die Zylindererkennung verringert wird, wird in der DE-PS 40 30 433 ein Verfahren zur Zylindererkennung für eine Mehrzylinder-Brennkraftmaschine vorgeschlagen, das ähnlich wie das bereits erwähnte Verfahren abläuft, jedoch im Unterschied zu diesem zur Zylindererkennung eine Verhältnisbildung vorsieht. Diese Verhältnisbildung erfolgt ausgehend von dem in der Auswerteschaltung erzeugten Rechtecksignal derart, daß jeweils die Zeitdauer zwischen einer Vorder- und einer Rückflanke zur Zeitdauer zwischen zwei Rückflanken in Bezug gesetzt wird und diese Verhältnisbildung für jeden Rechteckimpuls durchgeführt wird. Durch Vergleich der ermittelten Verhältniswerte mit einem vorgebbaren Bezugswert kann eine Bezugsmarke erkannt werden, wenn dieser Verhältniswert sich vom erwähnten Bezugswert in vorgebbarer Weise unterscheidet. Ist ein Zylinder erkannt, kann in üblicher Weise auch die Lage der übrigen Zylinder erkannt werden, da die Stellung der übrigen Zylinder, bezogen auf einen wählbaren Zylinder, stets bekannt ist.

Aus der DE 195 13 597 A1 ist eine Zylindererkennungsvorrichtung mit den Merkmalen des Oberbegriffs des Anspruchs 1 bekannt.

Die Aufgabe der vorliegenden Erfindung besteht darin, eine alternative Zylindererkennung aufzuzeigen, die insbesondere in dynamischen Betriebszuständen zuverlässige Ergebnisse liefert.

Vorteile der Erfindung

Die erfindungsgemäße Einrichtung zur Zylindererkennung bei einer Mehrzylinder-Brennkraftmaschine mit den Merkmalen des Anspruchs 1 hat gegenüber der bekannten Lösung den Vorteil, daß auch starke Drehzahlschwankungen im dynamischen Betrieb, also bei starkem Beschleunigen oder starkem Abbremsen, keine negativen Auswirkungen auf die Zylindererkennung haben. Erzielt wird dieser Vorteil, indem zur Zylindererkennung die Ausgangssignale eines Gebers, insbesondere eines Nockenwellengebers, der eine mit der Nockenwelle in Verbindung stehende Geberscheibe mit einer charakteristischen Oberfläche abtastet, ausgewertet werden, wobei eine zweifache Verhältnisbildung bestimmter Bereiche des rechteckförmigen Signales durchgeführt wird und das Verhältnis des zeitlichen Abstandes zwischen ungleichartigen Flanken des Rechtecksignales zum Zeitabstand zwischen gleichartigen Flanken des selben Bereichs des Rechtecksignales gebildet wird und dieses Verhältnis mit Hilfe des vorhergehenden auf dieselbe Weise gebildeten Verhältnis normiert wird. Aus der so erhaltenen Größe X wird letztendlich die Zylindererkennung derart durchgeführt, dass mehrere aufeinanderfolgende Verhältnisse $X_i$ miteinander verglichen werden.

Weitere Vorteile der Erfindung werden mit Hilfe der in den Unteransprüchen angegebenen Maßnahmen erzielt. Durch geeignete Wahl der Länge der Winkelmarkenken lässt sich ein Rechtecksignal erzeugen, dessen Periode einem sogenannten Segment entspricht. Der Zeitabstand zwischen ungleichen Flanken des Rechtecksignales entspricht dann einem Teilsegment.

Besonders vorteilhaft ist, dass die Zylindererkennung im Steuergerät der Brennkraftmaschine beziehungsweise dem Mikroprozessor dieses Steuergerätes ablaufen kann. Nach erfolgter Zylindererkennung kann das Steuergerät sofort entsprechende Ansteuerungen auslösen, beispielsweise für die sequentielle Kraftstoffeinspritzung, die Zündung, Klopfregelung oder ähnliches.

Ein weiterer Vorteil der Erfindung besteht darin, dass die Teilsegmente auf das im jeweiligen Arbeitstakt der Brennkraftmaschine liegende Gesamtsegment bezogen werden, wodurch auch bei fehlerhaft arbeitenden Zylindern eine Zylindererkennung sicher und schnell möglich ist. Dazu wird in besonders vorteilhafter Weise als Nockenwellengeberscheibe eine sogenannte Schnellstart-Geberscheibe mit unterscheidbaren Winkelmarken eingesetzt. Es ist dann auch ein Notlauf bei defekten Kurbelwellengebern möglich.

Zeichnung

Ein Ausführungsbeispiel der Erfindung ist für einen 4-Zylindermotor in der Zeichnung dargestellt und wird in der nachfolgenden Beschreibung näher erläutert. Eine erste Geberscheibe des Ausführungsbeispieles ist in Figur 1 dargestellt, es ist aus der DE-OS 41 31 004 teilweise bekannt, jedoch erfolgt die Signalauswertung nach einem anderen Prinzip. In Figur 2a, b sind zugehörige Signalverläufe aufgetragen, Figur 3a, b und Figur 4 zeigen Signalverläufe für eine Schnellstart-Geberscheibe.

Ausführungsbeispiel

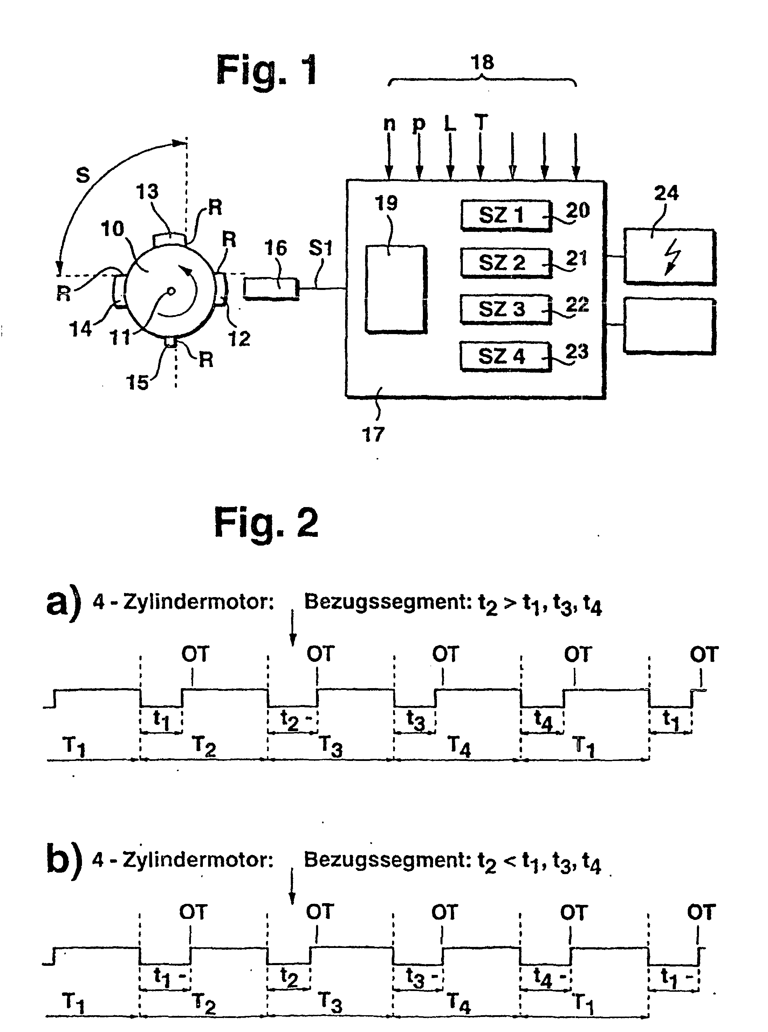

In Figur 1 sind die erfindungswesentlichen Bestandteile einer Brennkraftmaschine dargestellt. Dabei bezeichnet 10 eine Geberscheibe, die mit der Nockenwelle 11 verbunden ist und synchron mit dieser rotiert. Auf der Geberscheibe 10 sind Winkelmarken 12, 13, 14, 15 angeordnet, wobei die Winkelmarken 12, 13 und 14 identisch sind, während sich die Winkelmarke 15 in charakteristischer Weise unterscheidet, beispielsweise so, daß der Winkel, den diese Winkelmarke einschließt, kleiner ist. Diese Winkelmarke wird auch als Bezugsmarke oder Bezugssegment bezeichnet.

Der Abstand zwischen einer Flanke einer Winkelmarke und der gleichen Flanke der nächsten Winkelmarke wird üblicherweise als Segment S bezeichnet. Bei dem in Figur 1 dargestellten Ausführungsbeispiel, bei dem es sich um eine 4-Zylinder-Brennkraftmaschine handelt, beträgt der Winkel beziehungsweise die Länge des Segments S 90°. Mit der in Figur 1 gewählten Ausgestaltung der Geberscheibe sind alle Abstände zwischen den Flanken R der Winkelmarken äquidistant (90°). Die in Figur 1 dargestellte Geberscheibe ist beispielhaft, sie kann im Prinzip auch mit der Kurbelwelle der Brennkraftmaschine verbunden sein. Da sich diese doppelt so schnell dreht wie die Nockenwelle, müßte in diesem Falle die Zahl der winkelmarken gleich der halben Zylinderzahl sein.

Die Geberscheibe 10 einschließlich ihrer Winkelmarken, wird mit Hilfe eines Aufnehmers 16 abgetastet. Der Aufnehmer 16 ist beispielsweise ein Hallsensor, er liefert ein Ausgangssignal S1, das nach einer Aufbereitung zu einem Rechtecksignal die Oberflächenstruktur der Geberscheibe 10 widerspiegelt, wobei das Signal S1 high ist, wenn die Winkelmarken am Aufnehmer 16 vorbeilaufen und während der übrigen Zeiten low ist. In Figur 2a, b sind zwei verschiedene Signalverläufe für S1 dargestellt, die jeweils für 4-Zylinder-Motoren erhalten werden, wobei die Bezugswinkelmarke 15 und damit entsprechend das Bezugswinkelsegment einmal kürzer als die übrigen Winkelmarken ist und einmal länger. Ansonsten sind in Figur 2 noch die OT-Lagen der einzelnen Zylinder eingetragen.

Das Ausgangssignal S1 des Aufnehmers 16 wird in einem Mikroprozessor 17 ausgewertet. Dieser Mikroprozessor kann beispielsweise das Steuergerät der Brennkraftmaschine sein. Am Mikroprozessor 17 liegen weitere Eingangsgrößen an, die mit 18 bezeichnet sind und beispielsweise die Drehzahl n, den Saugrohrdruck p, ein Lastsignal L oder eine Temperatur, beispielsweise die Motortemperatur T, usw. Der Mikroprozessor 17 enthält neben weiteren nicht dargestellten Eingangs- und Verarbeitungseinheiten eine Verarbeitungsstufe 19 und vier Speicherzellen SZ1, SZ2, SZ3, SZ4. Wenn diese Anzahl von Speicherzellen der Anzahl der Winkelmarken beziehungsweise Zylinder der Brennkraftmaschine entspricht, kann in jede Speicherzelle eine Zeit eingeschrieben werden.

Der Mikroprozessor ermittelt Zeitabstände zwischen einzelnen Flanken des Signales S1, beispielsweise Zeitabstände ti zwischen ungleichartigen Signalflanken und Zeitabstände Ti zwischen gleichartigen Signalflanken. Aus diesen Zeitabständen ermittelt der Mikroprozessor nach dem noch zu beschreibenden Verfahren die Bezugsmarke 15, die einem vorgebbaren Zylinder zugeordnet ist. Aus der Erkennung der Bezugsmarke läßt sich somit die Zylindererkennung durchführen und nach erfolgter Zylindererkennung sind bekanntermaßen auch die Lagen der übrigen Zylinder ermittelbar, da alle Zylinder in einer festen Beziehung zueinander stehen.

Nach erfolgter Zylindererkennung kann der Mikroprozessor 17 beziehungsweise das Steuergerät der Brennkraftmaschine Ansteuerimpulse für die Zündung und Einspritzung auslösen, wobei in üblicher Weise die Berechnungen in Abhängigkeit der übrigen zugeführten Größen sowie gegebenenfalls unter Berücksichtigung von Kennfeldern durchgeführt werden. Nach der erfolgten Zylindererkennung beziehungsweise Synchronisation kann somit beispielsweise die sequentielle Kraftstoffeinspritzung, spezielle Zündungsregelungen oder eine Klopfregelung aktiviert werden.

Die erfindungsgemäße Erkennung der Bezugsmarke 15 und die damit verbundene Zylindererkennung wird vom Mikroprozessor 17 wie folgt durchgeführt: Die Zeitspannen ti werden jeweils gemessen und in einem Speicher des Mikroprozessors 17 abgelegt. Weiterhin werden die Zeitspannen Ti, die auch als Segmentzeiten bezeichnet werden, erfaßt und ebenfalls jeweils in einen Speicher des Mikroprozessors eingeschrieben. Die Zeiten ti und Ti sind einander so zugeordnet, daß sie zum größten Teil im gleichen Verbrennungstakt liegen. Damit bei der Bezugsmarkenbeziehungsweise Zylindererkennung der Dynamikeinfluß durch Drehzahländerungen vermindert wird, werden die Zeitspannen ti auf die Zeitspannen Ti bezogen; es wird also das Verhältnis ti/Ti gebildet. Dieses Verhältnis wird mittels des letzten Verhältnisses t(i -1) / T(i -1) normiert. Es wird also letztendlich folgender Wert gebildet:

$$Xi = (ti/Ti) / (t(i-1) / T(i-1))$$

Abhängig von diesem Wert Xi wird ein weiterer Wert A bestimmt, der in die den Zylindern beliebig zugeordneten Speicherzellen SZi addiert wird. Nachdem in den Speicherzellen SZi ein bestimmter Verlauf erkennbar ist, wird die Bezugsmarke erkannt beziehungsweise es wird der Bezugszylinder identifiziert.

Die Festlegung des Wertes A in Abhängigkeit vom Wert Xi erfolgt so, daß A jeweils den Wert -1, 0 oder +1 annehmen kann, je nachdem, wie groß der Wert von Xi ist.

Wird die in Figur 2a dargestellte Signalfolge betrachtet, ist zu erkennen, daß in dem Fall, in dem die Drehzahl der Nockenwelle konstant ist, gilt: t2> t1, t3, t4. Die Zeit t2, die der Bezugsmarke zugeordnet ist, ist also stets größer als die übrigen Zeiten. Die Zeiten t1, t3, t4 sind dabei im Rahmen der Fertigungstoleranzen der Geberscheibe identisch. Für die Zeitabstände Ti gilt: T1 = T2 = T3 = T4. Unter Berücksichtigung dieser Zusammenhänge läßt sich für den Zusammenhang zwischen dem Wert A und der Größe Xi festlegen, daß gilt:
A = -1, wenn Xi <1 ist.
A = 0, wenn Xi = 1 und
A = 1, wenn Xi >1

Mit dem in Figur 2b dargestellten Beispiel, bei dem die Zeit t2 der Bezugsmarke kleiner ist als die übrigen Zeiten t1, t3, t4, ist der Zusammenhang zwischen A und Xi gerade umgekehrt.

Der Wert A wird in die den Zylindern zugeordneten Speicherzellen SZi addiert, wobei üblicherweise die Speicherzellen bei Start oder Reset auf Null gesetzt werden. Die Einschreibung in die Speicherzellen erfolgt so, daß jeweils der nächste Wert in die nächste Speicherzelle eingeschrieben wird; deren Inhalt verändert sich von Zi zu Zi +A, wobei A, wie bereits erwähnt, die Werte -1, 0 oder +1 annehmen kann.

Wenn wie in Figur 2a dargestellt ist, zunächst die Zeitspanne t1 ermittelt wird, wird in die zugehörige Speicherzelle SZ1 für A der Wert Null hinzuaddiert, da das Verhältnis Xi = (t1/T1) / (t4/T4) ≤ 1 ist. Die Verhältnisbildung im Bereich von t2 ergibt dagegen einen Wert, der größer oder kleiner als Null ist, je nachdem, ob die Zeit vor die Bezugsmarke oder die Zeit nach der Bezugsmarke mit der entsprechenden Gesamtzeit in bezug gesetzt wird.

Da die Bezugsmarke bei fehlerlosem Arbeiten stets an derselben Stelle erscheint, wird in eine Speicherzelle stets der Wert -1 geschrieben, während in die darauffolgende stets der Wert +1 eingetragen wird. In die übrigen Speicherzellen wird jeweils der Wert Null eingetragen. Der Vergleich des Inhalts der Speicherzellen mit einem vorgebbaren Schwellwert oder der Vergleich der Speicherzellen untereinander ergibt somit zuverlässig eine Aussage, ob die der Speicherzelle zugeordnete Zeit beziehungsweise entsprechend die zugeordnete Winkelmarke die Bezugsmarke ist oder nicht.

Das erfindungsgemäße Vorgehen zur Bezugsmarken- und damit Zylindererkennung besteht darin, mehrere aufeinanderfolgende Verhältnisse Xi miteinander zu vergleichen und die Bezugsmarke beispielsweise dann zu erkennen, wenn gilt: X1<X2<X3, wobei die Werte von X1 und X3 zusätzlich mit einem wählbaren Faktor gewichtet werden können, der auf die vorhandenen Winkelmarkenlängen abgestimmt werden sollte.

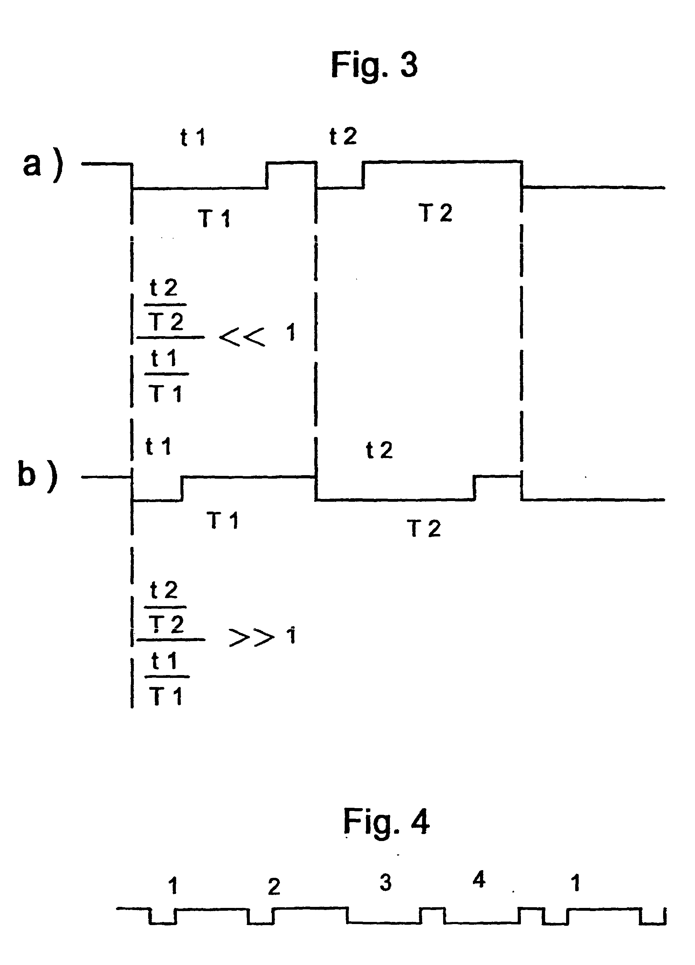

Mit einer anders geformten Geberscheibe, z. B. einer sogenannten Schnellstartgeberscheibe läßt sich auch ein Auswerteverfahren darstellen, bei dem zwei abweichende, untereinander gleiche Segmentlängen auftreten, wobei diese abweichenden Segmentlängen gegenüber den Längen der Bezugssegmente verkürzt oder verlängert sind und z. B. eine Segmentlänge gegenüber einem Bezugssegment verkürzt und gegenüber dem anderen Bezugssegment verlängert ist. Die beiden Bezugssegmente folgen dann entweder direkt aufeinander oder um 180° versetzt. Eine solche Geberscheibe führt dann zu einem Signalverlauf wie er in Figur 4 für eine 4-Zylinder-Brennkraftmaschine dargestellt ist.

Mit einer Geberscreibe, die zu einem Signalverlauf führt, wie er in Figur 3a oder 3b dargestellt ist, mit Zeiten t1, t2, T1, T2 kann bereits die Bildung eines Verhältnisses zur Zylindererkennung ausreichend sein, da gilt:

$$\frac{\frac{t2}{T2}}{\frac{t1}{T1}} << 1$$

für einen Signalverlauf gemäß Figur 3a oder

$$\frac{\frac{t2}{T2}}{\frac{t1}{T1}} >> 1$$

im Signalbereich gemäß Figur 3b.

Wird bei einer Brennkraftmaschine mit Kurbelwellengeber und einem Nockenwellengeber wie vorstehend beschrieben, ein Defekt des Kurbelwellengebers erkannt, kann ein Notlauf stattfinden, bei dem die Informationen, die eigentlich vom Kurbelwellengeber geliefert werden sollten, aus den Informationen eines Nockenwellengebers gewonnen werden.

**Patentansprüche**

**1.** Einrichtung zur Zylinderkennung bei einer Mehrzylinder-Brennkraftmaschine, mit einer mit einer Welle (11) der Brennkraftmaschine synchron rotierenden Geberscheibe (10), die eine mit der Zylinderzahl korrelierte Anzahl von Winkelmarken (12,13,14,15) aufweist, von denen wenigstens eine sich von den anderen unterscheidet und eine Bezugsmarke (15) bildet, die eine Lage eines vorgebbaren Zylinders kennzeichnet, und mit einem feststehenden Aufnehmer (16), der die Geberscheibe (10) abtastet und ein den Winkelmarken (12,13,14,15) entsprechendes Ausgangssignal (S1) liefert, Auswertemitteln (17), welchen das Ausgangssignal (S1) zugeführt wird, wobei die Auswertemittel derart ausgestaltet sind, daß sie aus dem Signal Zeitabstände ti zwischen Vorder- und Rückflanken und Ti zwischen gleichartigen Flanken ermitteln, wobei das aktuelle Verhältnis ti/Ti zum vorhergehenden Verhältnis t(i -1) / T(i -1) gebildet wird, zur Ermittlung einer Größe Xi, aus deren Wert die Bezugsmarke erkennbar ist, **dadurch gekennzeichnet, dass** die Größe Xi mit vorhergehenden und/oder nachfolgenden Größen Xi -1, Xi +1 verglichen wird und aus den Differenzen dieser Größen die Bezugsmarke (15) erkannt wird.

2. Einrichtung nach Anspruch 1, **dadurch gekennzeichnet, dass** die Auswertemittel (17) einen Mikroprozessor (17) umfassen, insbesondere den Mikroprozessor des Steuergerätes der Brennkraftmaschine.

3. Einrichtung zur Zylindererkennung nach einem der vorhergehenden Ansprüche, **dadurch gekennzeichnet, dass** aus der Größe Xi eine weitere Größe A gebildet wird, die den Wert -1, 0 oder +1 annehmen kann, dass die Auswertemittel (17) eine Speicherzelle pro Zylinder (20,21,22,23) aufweisen und der Wert der Größe A in die jeweils zugeordnete Speicherzelle (20,21,22,23) eingeschrieben wird.

4. Einrichtung zur Zylindererkennung nach Anspruch 3, **dadurch gekennzeichnet, dass** der Inhalt der Speicherzellen (20,21,22,23) laufend aktualisiert wird, bis der Inhalt einer Speicherzelle (20,21,22,23) einen Schwellwert überschreitet, dass diese Schwellwertüberschreitung erkannt wird und die dem betreffenden Speicher (20,21,22,23) zugeordnete Winkelmarke (12,13,14,15) als Bezugsmarke (15) erkannt wird beziehungsweise der dem betreffenden Speicher (20,21,22,23) oder der betreffenden Winkelmarke (12,13,14,15) zugeordnete Zylinder als Bezugszylinder (15) erkannt wird.

5. Einrichtung nach Anspruch 3 oder 4, **dadurch gekennzeichnet, dass** der Inhalt der Speicherzellen (20,21,22,23) bei Start oder Reset auf Null gesetzt wird.

6. Einrichtung nach einem der vorhergehenden Ansprüche, **dadurch gekennzeichnet, dass** die Bezugsmarkenerkennung und damit die Zylindererkennung erfolgt, wenn in den Speicherzellen (20,21,22,23) eine bestimmte Folge von Schwellwerten über- beziehungsweise unterschritten wird.

7. Einrichtung zur Zylindererkennung nach einem der vorhergehenden Ansprüche, **dadurch gekennzeichnet, dass** eine Geberscheibe (10) zwei von den übrigen Winkelmarken (12,13,14,15) abweichende Winkelmarken aufweist, wobei dann zwei abweichende Segmentlängen auftreten und eine Segmentlänge gegenüber dem Bezugssegment verkürzt und das andere Bezugssegment verlängert ist und die beiden Bezugssegmente direkt aufeinander folgen oder um einen Winkel von 180° versetzt sind.

8. Einrichtung zur Zylindererkennung nach einem der vorhergehenden Ansprüche, **dadurch gekennzeichnet, dass** eine Geberscheibe (10) eingesetzt wird, die mindestens zwei von den übrigen Winkelmarken (12,13,14,15) abweichende, untereinander jedoch gleiche Winkelmarken aufweist, wobei die dadurch gebildeten abweichenden Segmentlängen gegenüber den Bezugssegmenten verkürzt oder verlängert sind und die Bezugssegmente direkt aufeinander folgen.

9. Einrichtung zur Zylindererkennung nach einem der vorhergehenden Ansprüche, **dadurch gekennzeichnet, dass** das Steuergerät weitere Daten bezüglich des Betriebszustandes der Brennkraftmaschine erhält und aus diesen Daten sowie abgespeicherten Kennfeldern nach erfolgter Zylindererkennung und damit erfolgter Synchronisation Steuersignale für die Zündung und/oder Einspritzung sowie gegebenenfalls weitere Steuersignale abgibt.

**Claims**

1. Device for cylinder identification in a multicylinder internal combustion engine, having a sensor disc (10) which rotates synchronously with a shaft (11) of the internal combustion engine and has a number of angular marks (12, 13, 14, 15) correlated with the number of cylinders, at least one of which angular marks differs from the others and forms a reference mark (15) which indicates a position of a predeterminable cylinder, and having a stationary detector (16) which scans the sensor disc (10) and supplies an output signal (S1) corresponding to the angular marks (12, 13, 14, 15), and having evaluation means (17), to which the output signal (S1) is supplied, the evaluation means being designed in such a manner that they determine time intervals ti between the front and rear edges and Ti between identical edges from the signal, the current ratio ti/Ti being formed relative to the preceding ratio t(i -1)/T(i -1), in order to determine a variable Xi, from the value of which the reference mark can be identified, **characterized in that** the variable Xi is compared with preceding and/or following variables Xi -1, Xi +1 and the reference mark (15) is identified from the differences of these variables.

2. Device according to Claim 1, **characterized in that** the evaluation means (17) comprise a microprocessor (17), in particular the microprocessor of the control unit of the internal combustion engine.

3. Device for cylinder identification according to one of the preceding claims, **characterized in that** a further variable A is formed from the variable Xi, it being possible for the further variable to assume the value -1, 0 or +1, **in that** the evaluation means (17) have one memory cell per cylinder (20, 21, 22, 23), and the value of the variable A is written into the respectively assigned memory cell (20, 21, 22, 23).

4. Device for cylinder identification according to Claim 3, **characterized in that** the content of the memory cells (20, 21, 22, 23) is updated continuously until the content of one memory cell (20, 21, 22, 23) exceeds a threshold value, **in that** this exceeding of the threshold value is identified and the angular mark (12, 13, 14, 15) which is assigned to the relevant memory (20, 21, 22, 23) is identified as the reference mark (15) and the cylinder assigned to the relevant memory (20, 21, 22, 23) or to the relevant angular mark (12, 13, 14, 15) is identified as the reference cylinder (15).

5. Device according to Claim 3 or 4, **characterized in that** the content of the memory cells (20, 21, 22, 23) is set at the start or is reset to zero.

6. Device according to one of the preceding claims, **characterized in that** the identification of the reference mark and therefore the cylinder identification takes place if a certain sequence of threshold values is exceeded or fallen below in the memory cells (20, 21, 22, 23).

7. Device for cylinder identification according to one of the preceding claims, **characterized in that** a sensor disc (10) has two angular marks which differ from the remaining angular marks (12, 13, 14, 15), two differing segment lengths then occurring and one segment length being shortened with respect to the reference segment and the other reference segment being extended, and the two reference segments directly following one another or being offset by an angle of 180°.

8. Device for cylinder identification according to one of the preceding claims, **characterized in that** a sensor disc (10) is used which has at least two angular marks which differ from the remaining angular marks (12, 13, 14, 15) but are identical with each other, the resultantly formed, differing segment lengths being shortened or extended with respect to the reference segments and the reference segments directly following one another.

9. Device for cylinder identification according to one of the preceding claims, **characterized in that** the control unit obtains further data relating to the operating state of the internal combustion engine and uses these data and stored characteristic diagrams, after cylinder identification has taken place and therefore synchronization has taken place, to output control signals for the ignition and/or injection and, if appropriate, further control signals.

**Revendications**

1. Dispositif d'identification d'un cylindre dans un moteur à combustion interne avec plusieurs cylindres, comportant

   - un disque de détection (10) tournant de façon synchronisée avec un arbre (11) du moteur à combustion interne, le disque de détection présentant un nombre de marques angulaires (12, 13, 14, 15) correspondant au nombre de cylindres, parmi lesquelles au moins l'une se différencie des autres et forme une marque de référence (15) qui caractérise une position d'un cylindre pouvant être prédéterminée, et comportant un capteur fixe (16), qui balaye le disque de détection (10) et fournit un signal de sortie (S1) correspondant aux marques angulaires (12, 13, 14, 15),
   - ainsi que des moyens d'exploitation (17) vers lesquels est envoyé le signal de sortie (S1), les moyens d'exploitation étant configurés de telle sorte qu'ils déterminent, à partir du signal, des intervalles de temps ti entre des flancs avant et arrière et Ti entre des flancs de même type, le rapport actuel ti/Ti étant formé par rapport au rapport précédent t(i-1)/T(i-1) afin de déterminer une grandeur Xi, dont la valeur permet d'identifier la marque de référence,

   **caractérisé en ce que**
   la grandeur Xi est comparée avec les grandeur précédentes et/ou suivantes Xi-1, Xi+1, et la marque de référence (15) est identifiée à partir des différences de ces grandeurs.

2. Dispositif selon la revendication 1,
   **caractérisé en ce que**
   les moyens d'exploitation (17) comprennent un microprocesseur (17), en particulier le microprocesseur de l'appareil de commande du moteur à combustion interne.

3. Dispositif d'identification d'un cylindre selon l'une quelconque des revendications précédentes,
   **caractérisé en ce qu'**
   à partir de la grandeur Xi est formée une autre grandeur A, qui peut prendre la valeur -1, 0 ou +1, les moyens d'exploitation (17) présentent un cellule de mémoire pour chaque cylindre (20, 21, 22, 23) et la valeur de la grandeur A est inscrite dans la cellule de mémoire (20, 21, 22, 23) respective associée.

4. Dispositif d'identification d'un cylindre selon la revendication 3,
**caractérisé en ce que**
le contenu des cellules de mémoire (20, 21, 22, 23) est actualisé en permanence, jusqu'à ce que le contenu d'une cellule de mémoire (20, 21, 22, 23) dépasse une valeur de seuil, et ce dépassement de la valeur de seuil est identifié et la marque angulaire (12, 13, 14, 15) associée à la mémoire concernée (20, 21, 22, 23) est identifiée en tant que marque de référence (15), ou le cylindre associé à la mémoire concernée (20, 21, 22, 23) ou à la marque angulaire concernée (12, 13, 14, 15) est identifié en tant que cylindre de référence (15).

5. Dispositif selon la revendication 3 ou 4,
**caractérisé en ce que**
le contenu des cellules de mémoire (20, 21, 22, 23) est mis à zéro lors de la mise en marche ou de la réinitialisation.

6. Dispositif selon l'une quelconque des revendications précédentes,
**caractérisé en ce que**
l'identification de la marque de référence et ainsi l'identification du cylindre se produit lorsque dans les cellules de mémoire (20, 21, 22, 23), une suite donnée de valeurs de seuil est dépassée par le haut ou par le bas.

7. Dispositif d'identification d'un cylindre selon l'une quelconque des revendications précédentes,
**caractérisé en ce qu'**
un disque de détection (10) présente deux marques angulaires différentes des autres marques angulaires (12, 13, 14, 15), et ensuite deux longueurs de segments différentes apparaissent et une longueur de segment est raccourcie par rapport au segment de référence tandis que l'autre segment de référence est rallongé, et les deux segments de référence se suivent directement ou sont décalés l'un par rapport à l'autre d'un angle de 180°.

8. Dispositif d'identification d'un cylindre selon l'une quelconque des revendications précédentes,
**caractérisé en ce que**
l'on utilise un disque de détection (10) qui présente au moins deux marques angulaires différentes des autres marques angulaires (12, 13, 14, 15) mais pourtant identiques l'une par rapport à l'autre, les longueurs de segment différentes ainsi formées étant raccourcies ou rallongées par rapport aux segments de référence et les segments de référence se suivent directement.

9. Dispositif d'identification d'un cylindre selon l'une quelconque des revendications précédentes,
**caractérisé en ce que**
l'appareil de commande contient d'autres données relatives à l'état de fonctionnement du moteur à combustion interne et il émet, à partir de ces données et de diagrammes caractéristiques stockés après une identification de cylindre réussie et ainsi une synchronisation réussie, des signaux de commande pour l'allumage et/ou l'injection ainsi que, le cas échéant, d'autres signaux de commande.

# Fig. 1

18

n p L T

19

SZ 1 — 20
SZ 2 — 21
SZ 3 — 22
SZ 4 — 23

24

16 S1

17

S

13
R
10 R
R
14 11 12
R
15

# Fig. 2

**a)** 4 - Zylindermotor:   Bezugssegment: $t_2 > t_1, t_3, t_4$

OT   OT   OT   OT   OT

$t_1$   $t_2$   $t_3$   $t_4$   $t_1$

$T_1$   $T_2$   $T_3$   $T_4$   $T_1$

**b)** 4 - Zylindermotor:   Bezugssegment: $t_2 < t_1, t_3, t_4$

OT   OT   OT   OT   OT

$t_1$   $t_2$   $t_3$   $t_4$   $t_1$

$T_1$   $T_2$   $T_3$   $T_4$   $T_1$

# Fig. 3

$$\frac{\frac{t\,2}{T\,2}}{\frac{t\,1}{T\,1}} << 1$$

$$\frac{\frac{t\,2}{T\,2}}{\frac{t\,1}{T\,1}} >> 1$$

# Fig. 4